Europäisches Patentamt

European Patent Office

Office européen des brevets

(19)

(11) Publication number: **0 027 473**
**B1**

(12) # EUROPEAN PATENT SPECIFICATION

(45) Date of publication of patent specification: **29.02.84**

(21) Application number: **80900783.4**

(22) Date of filing: **21.04.80**

(86) International application number:
**PCT/JP80/00080**

(87) International publication number:
**WO 80/02242 30.10.80 Gazette 80/25**

(51) Int. Cl.³: **B 22 D 11/06, B 21 B 1/46,
B 32 B 31/00**

(54) **PROCESS FOR PRODUCING MULTI-LAYERED ALLOYS.**

(30) Priority: **20.04.79 JP 52100/79 U**

(43) Date of publication of application:
**29.04.81 Bulletin 81/17**

(45) Publication of the grant of the patent:
**29.02.84 Bulletin 84/9**

(84) Designated Contracting States:
**CH DE FR LI NL**

(56) References cited:
**GB - A - 2 003 772**
**JP - A - 53 106 634**
**JP - A - 54 043 160**
**JP - U - 54 082 008**
**US - A - 3 295 174**
**US - A - 3 971 123**

**GB-A-15548/1913**

(73) Proprietor: **TOKYO SHIBAURA DENKI KABUSHIKI
KAISHA**
**72, Horikawa-cho Saiwai-ku**
**Kawasaki-shi Kanagawa-ken 210 (JP)**

(72) Inventor: **SHIMANUKI, Senji Tokyo Shibaura Denki
Kabushiki**
**Kaisha Sogo Kenkyusho, 1 Toshibacho Komukai**
**Saiwai-ku Kawasaki-shi Kanagawa-ken 210 (JP)**
Inventor: **INOMATA, Koichiro Tokyo Shibaura
Denki Kabushiki**
**Kaisha Sogo Kenkyusho, 1 Toshibacho Komukai**
**Saiwai-ku Kawasaki-shi Kanagawa-ken 210 (JP)**

(74) Representative: **Patentanwälte Henkel, Pfenning,
Feiler, Hänzel & Meinig**
**Möhlstrasse 37**
**D-8000 München 80 (DE)**

Courier Press, Leamington Spa, England.

Process for producing multi-layered alloys

The present invention relates to a process for producing a multi-layered alloy having at least one layer of amorphous alloy, by ejecting from a nozzle a first molten metal onto one of a pair of rollers rotating at a high speed or onto a metal belt driven by the roller, and rotating the ejected metal with the rollers for rapid cooling.

Various multi-layer alloys for laminated bodies of different metals (to include alloys hereinafter) are known in various fields, for such applications as bimetals with two metals having different heat expansion ratios; cladding material consisting of beryllium copper which is excellent in mechanical strength, and a layer of a noble metal which is excellent in contact characteristics; magnetic wires consisting of beryllium copper and Permalloy (trade name); superconductive wires consisting of copper and a superconductive body; composite magnetic materials used in electronic switching machines; leads used in self-holding type lead switches and so on.

Recently, amorphous alloys obtained by rapidly cooling molten metal are receiving a lot of attention due to their particular electromagnetic and mechanical characteristics, and the application of such amorphous alloys in multi-layer alloys has been desired.

However, since conventional multi-layer alloys are manufactured by adhering two different kinds of metals by heating or pressing, electrodeposition, vacuum evaporation, plating, welding and so on, the process has been complex. Furthermore, the manufacture of a multi-layer alloy including an amorphous alloy has involved the problem that adhering by heating cannot be performed. Thus, an effective, practical means for manufacturing a multi-layer alloy including an amorphous alloy has not been discovered yet.

A method has recently been proposed by JP—A—53-106634 according to which different kinds of molten metals are ejected on each of a pair of revolving rollers, and they are joined and adhered by the rollers of manufacturing a multi-layer amorphous alloy. However, according to this method, the distance between the nozzles for ejecting the two different kinds of metals must be made extremely small, obstructing the design, limiting the adhering conditions, and providing an impractical solution to the problem. Further, the joining of the two metal layers is performed only between a pair of rollers, so that the adhering time is short and the adhesion between the obtained layers of the multi-layer alloy is disadvantageously low.

A method to increase the thickness of metal strips which were made by causing molten metal to impinge in a stream upon the surface of a cooled rotating body is known from GB—A—15 548 AD 1913. These thicker strips are produced by causing a second stream of molten metal to impinge upon the strips produced in the aforementioned manner, and the resulting thickened strips could be further thickened by similarly applying a further stream of molten metal. This method, however, only describes the production of strips made of one material.

It is further known from US—A—3 971 123 a metallurgical process for the production of a semi-finished product for subsequent rolling or forging into a finished product, wherein a melt of molten steel is simultaneously and continuously formed on moving chill surfaces into a plurality of layers of substantially uniformly fine gain structure throughout the thickness of each layer and stripping the layers from the chill surfaces as they are formed, such layers are brought together in face-to-face contact when they are at the solidus temperature where the metal in the layers shows no apparent liquid at the surface but before it has developed sufficient plasticity for hot rolling, and the contacting layers are pressed together.

Here also the production of strips made of only one material is described. Furthermore, each of the layers is formed on an own moving chill surface before the layers are brought together. The corresponding device therefore needs a plurality of rollers for producing the single layers.

The present invention has been made in consideration of this prior art and has for its object to provide a process for producing a multi-layered amorphous alloy in which the adhesion is improved, the feeding positions of the molten metals can be freely chosen without any problems, and at least one layer of amorphous alloy is included.

The present invention therefore provides a process for producing a multi-layered alloy as defined in the beginning which is characterized in that two molten metal layers are formed on the rotating roller or the belt by ejecting from a second nozzle a second molten metal different from said first metal onto said first molten metal for rapid cooling, the two metal layers being then adhered under pressure by rolling them between said pair of rollers.

Brief description of drawings

Fig. 1 is a partial sectional view schematically illustrating a device for producing a multi-layered amorphous alloy used in one embodiment of the present invention; and

Fig. 2 is a partial sectional view schematically illustrating a device for producing a multi-layered amorphous alloy used in another embodiment of the present invention.

Best mode of carrying out the invention

The present invention will now be described in more detail with reference to the accompanying drawings.

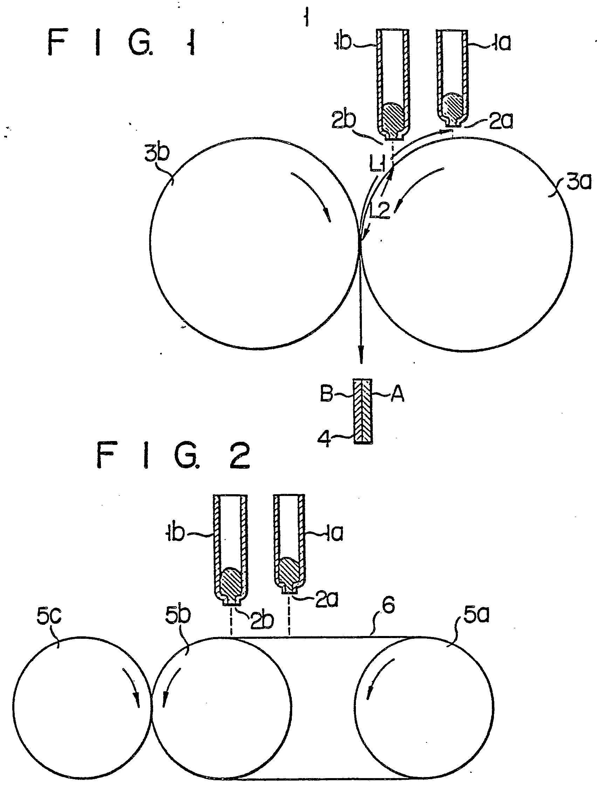

A device for carrying out the method of the present invention is shown in Fig. 1. Referring to Fig. 1, a first nozzle 2a and a second nozzle 2b are disposed at the lower ends of a first tubular container 1a and a second tubular container 1b of quartz glass tubes, respectively, for example, for holding two different kinds of raw material metals A and B molten by high frequency induction melting. Below these first and second nozzles 2a and 2b are disposed a first roller 3a paired with a second roller 3b. The molten metal A melted by the first tubular container 1a is ejected through the first nozzle 2a onto the first roller 3a by the pressure of an inert gas. The ejected molten metal A is rapidly cooled by contacting the first roller 3a rotating at a high speed and forms a lower layer consisting of amorphous metal A. Subsequently, the molten metal B melted by the second tubular container 1b is ejected on the lower layer of the amorphous metal A through the second nozzle 2a to form an upper layer of amorphous metal B. The two layers of metals thus laminated are rapidly cooled and rolled between the first roller 3a and the second roller 3b to provide a two-layer amorphous alloy 4 of excellent adhesion. Although the lower layer was a layer of an amorphous metal, it may alternatively be a crystalline metal layer.

For obtaining a multi-layer alloy of good quality, the upper and lower layers must not mix with each other. In order to make sure that the upper and lower layers do not mix with each other, the temperature $T_1$ of the lower layer of the amorphous metal A when the molten metal B of the upper layer is ejected on it must satisfy inequality (1) or (2) described below:

1. When the metal of the lower layer is an amorphous metal:

$$Tx < T_1 < Ts \qquad (1)$$

Tx: crystallizing temperature (°C).
Ts: solidifying temperature (°C).

When T1 is higher than Ts, the lower layer metal A and the upper layer metal B mix together. When $T_1$ is lower than Tx, the lower layer metal becomes crystalline by contacting the molten metal B constituting the upper layer. The solidifying temperature Ts changes according to the cooling speed and is generally within the range shown below with respect to the cooling speed enabling amorphous:

$$Tm-150°C < Ts < Tm-50°C$$

where
Tm is the melting point (°C).
$T_1$ is preferably in the range of 2/3 $Tm \leq T_1 < Ts$, and more preferably in the range of $Ts-100°C < T_1 < Ts$ (Tm of the alloy composition for obtaining an amorphous alloy is generally over 800°C and 2/3 Tm > Tx).

2. When the lower layer metal is a crystalline metal:

$$2/3\,Tm < T_1 < Ts \qquad (2)$$

where
Tm is the melting point.

When $T_1$ is higher than Ts, the lower layer metal A and the upper layer metal B mix together. When $T_1$ is lower than 2/3 Tm, the lower layer metal completely solidifies so that good adhesion may not be achieved.

Although $T_1$ is lower than Ts in both the cases described above, a multi-layer alloy of greater adhesion may be obtained when $T_1$ is as close to Ts as possible.

In order to cool and roll the two layers and to obtain a multi-layer alloy of great adhesion, the temperature $T_2$ of the upper layer at the contact point between the first roller 3a and the second roller 3b must satisfy the following inequality:

$$2/3\,Tm < T_2 < Tm \qquad (3)$$

When $T_2$ is higher than Tm or lower than 2/3 Tm, cooling and adhesion of the two layers may not be performed well.

The above-mentioned $T_1$ and $T_2$ may be calculated according to the Newton cooling equation as shown below:

$$T = T_B + (T_A - T_B)e - \frac{ht}{\rho Cpd}$$

where
$T_B$: roller temperature (°C),
$T_A$: temperature of molten metal (°C),
h: coefficient of heat transfer between the rollers and the ejected metal,
t: cooling time,
$\rho$: density of the ejected metal,
Cp: specific heat of the ejected metal,
d: thickness of the metal layers before rolling.

For determining the actual operating conditions, the times for ejecting the lower layer metal A and the upper layer metal B from the nozzles are determined from the above-mentioned temperature conditions, and the locations for ejecting the lower layer metal A and the upper layer metal B on the respective rollers are determined from each time.

While determining these conditions, the rotating speed of the rollers, the diameter of the rollers, the pressure of the introduced gas, the diameter of the nozzles, the kinds of the raw material metals and so on must be considered. The ejecting location is defined by the length L of the arc from the contact point between the rollers. When the time the ejected molten metal reaches the contact point between the rollers is defined as t, the ejecting location L may be represented as follows:

$$L = \frac{\pi DNt}{60}$$

where

N: rotating speed of the rollers (RPM),

D: diameter of the rollers,

t: time after ejecting.

With the method described above, the temperature of the molten metal A ejected from the first nozzle 2a is lower than the solidifying temperature, but before complete solidification occurs, the molten metal B is ejected from the nozzle 2b. Before the molten metal B completely solidifies, the metal layers are rolled. Thus, the respective molten metals A and B do not mix together between the two layers, so that a multi-layer amorphous alloy which is not mixed but sufficiently dispersed and greatly improved in adhesion may be obtained.

With the method and device as described above, the error in the positioning between the metal layers may be easily prevented.

In the above example, a device was used in which the molten metals A and B were supplied to one of the rollers 3a and 3b, i.e., roller 3a. However, as shown in Fig. 2, a device may alternatively be used in which a metal belt 6 is driven by a pair of rotary rollers 5a and 5b, the same tubular containers 1a and 1b as those of the device shown in Fig. 1 are disposed above the metal belt 6, and the molten metals are ejected from the nozzles 2a and 2b to be rolled and adhered between the belt 6 and a rolling roller 5c. With this device, the roller diameter may be made smaller for ejecting the molten metal on the metal belt 6 so that the distance between the tubular containers 1a and 1b may be sufficient and the arrangement of these containers may become easy. Thus, the arrangement of the nozzles perpendicular to the belt which is the cooling body becomes easy, contact between the molten metals and the cooling body becomes good, and the cooling efficiency is improved so that the manufacture of the multi-layer alloy including amorphous metal becomes easy.

The present invention will now be described in more detail with reference to its examples.

Example 1

A multi-layer amorphous alloy was manufactured with a device as shown in Fig. 1. The first tubular container 1a and the second tubular container 1b held 10 g each of $Co_{75}Si_{10}B_{15}$ and $Ni_{75}Si_{10}B_{15}$ respectively, prepared in advance by high frequency induction melting. The containers were located at $L_1$=70 mm and $L_2$=40 mm circumferentially away from the contact point of the pair of rollers 3a and 3b. After melting both alloys by high frequency induction furnaces, molten alloys $Co_{75}Si_{10}B_{15}$ at 1,200°C and $Ni_{75}Si_{10}B_{15}$ at 1,000°C were simultaneously ejected on the points of the roller 3a corresponding to $L_1$=70 mm and $L_2$=40 mm from the first nozzle 2a and the second nozzle 2b, respectively, (the nozzle diameter was 0.4 mm in each case) with argon gas at 0.5 atm. The alloys were rolled and rapidly cooled by the rollers 3a and 3b (200 mm diameter) rotating at a high speed of 2,500 rpm. As a result, a ribbon-shaped alloy strip of 1.4 mm width and 70 $\mu$m thickness was obtained.

This alloy strip was embedded in a cylinder of epoxy resin 25.4 mm (1 inch) in diameter and was polished as a mirror surface. The joined surface was analyzed with an X-ray microanalyzer. The $Co_{75}Si_{10}B_{15}$ alloy and the $Ni_{75}Si_{10}B_{15}$ alloy were divided with a sharp boundary in the direction of the thickness. Thus, the ribbon-shaped alloy strip was found to consist of two layers of different alloys. Both surfaces of the ribbon-shaped alloy strip were examined by X-ray diffractiometry, and they were both found to be amorphous.

A sample of 30 mm in length was cut from the above-mentioned ribbon-shaped alloy strip and a bending test of 180 degrees was performed. No separation was observed.

In this example, the temperature on the roller 3a corresponding to $L_2$=40 mm, that is the point where the $Ni_{75}Si_{10}B_{15}$ alloy and the $Co_{75}Si_{10}B_{15}$ alloy overlapped, was 1,000°C. This was higher than the crystallizing temperature of 520°C and lower than the solidifying temperature of 1,050°C. The temperature of the $Ni_{75}Si_{10}B_{15}$ alloy at the contact point between the rollers 3a and 3b was 900°C. This was higher than 2/3 of the melting point, or 700°C, and was lower than the melting point of 1,000°C.

Example 2

A ribbon-shaped alloy strip of 1.3 mm width and 60 $\mu$m thickness was manufactured in the same manner as in Example 1, except that the molten $Pd_{83.5}Si_{16.5}$ alloy at 1,000°C and the molten $Fe_{75}Si_{10}B_{10}$ alloy at 1,200°C were injected at the positions on the roller 3a corresponding to $L_2$=50 mm and $L_1$=65 mm. The section of the ribbon-shaped alloy strip was analyzed with an X-ray microanalyzer in a similar manner as in Example 1. The joined surface between the $Pd_{83.5}Si_{16.5}$ layer and the $Fe_{75}Si_{10}B_{15}$ layer was sharp. The X-ray diffractiometry revealed that the two amorphous metal layers in the direction of the thickness were present. The separation test was performed as in the Example 1, and no separation was observed in a bending test of 180 degrees.

The temperature of the $Fe_{75}Si_{10}B_{10}$ alloy on the point of the roller 3a corresponding to $L_2$=50 mm, that is, where the $Pd_{83.5}Si_{16.5}$ alloy and the $Fe_{75}Si_{10}B_{15}$ overlapped, was 950°C. This was higher than the crystallizing temperature of 540°C and was lower than the solidifying temperature of 1,100°C. The temperature of the $Pd_{83.5}Si_{16.5}$ alloy at the contact point between the rollers 3a and 3b was 750°C. This was higher than 2/3 of the melting point, or 500°C, and was lower than the melting point of 850°C.

Example 3

This example is the case wherein the two layer amorphous alloy consists of an amorphous alloy (upper layer) and a crystalline alloy (lower layer).

A ribbon-shaped alloy strip was manufactured in a manner similar to Example 1 by ejecting molten Permalloy $Fe_{55}Ni_{45}$ at 1,500°C and the molten alloy $Pd_{80}Si_{20}$ at 1,000°C at the positions of the roller 3a corresponding to $L_1=80$ mm and $L_2=50$ mm. The size of the nozzles 2a and 2b was $12\times0.5$ mm$^2$, the pressure of argon gas was 0.4 atm, and the rotational speed of the rollers 3a and 3b was 3,000 rpm. The obtained ribbon-shaped alloy strip was about 12 mm in width and about 55 $\mu$m in thickness. When the boundary between the layers was examined with an X-ray microanalyzer, the layers of Permalloy and $Pd_{80}Si_{20}$ were found to be distinct at the boundary, and the ribbon-shaped alloy strip was found to consist of two different kinds of metals. X-ray diffractiometry revealed that $Pd_{80}Si_{20}$ was amorphous and Permalloy was crystalline. The separation test was performed as in Example 1, and no separation was observed in a bending test of 180 degrees.

In this embodiment, the temperature of the Permalloy at the point on the roller 3a corresponding to $L_2=50$ mm, that is, where the $Pd_{80}Si_{20}$ alloy and the Permalloy overlapped, was 1,200°C. This was higher than 2/3 of the melting point, or 930°C, and was lower than the solidifying point of 1,350°C. The temperature of the $Pd_{80}Si_{20}$ alloy at the contact point between the rollers 3a and 3b was 750°C. This was higher than 2/3 of the melting point, or 500°C, and was lower than the melting point of 850°C.

## Comparative Example

A ribbon-shaped alloy strip of 1.2 mm width and 82 $\mu$m thickness was manufactured in a manner similar to Example 1 except that the molten $Ni_{75}Si_{10}B_{15}$ alloy was ejected on the point of the roller 3a corresponding to $L_1=70$ mm and the molten $Co_{75}Si_{10}B_{15}$ alloy was ejected on the point of the roller 3b corresponding to a distance $L_2=40$ mm along the circumferential direction of the roller 3b measured from the contact point between the two rollers. This alloy was examined with an X-ray microanalyzer and the layers was found to be separated. The alloys easily separated when a bending test of 180 degrees was performed.

As has been described, with the method of the present invention, it is easy to manufacture a multi-layer alloy which has at least one layer of amorphous alloy and which is especially strong in adhesion.

With the method of the present invention, more than three nozzles may be disposed above one of the pair of rollers for manufacturing a multi-layer alloy of three layers or more.

## Industrial applicability

The method of the present invention for manufacturing a multi-layer alloy having at least one amorphous layer is applicable to the manufacture of various composite alloy materials such as high-sensitivity bimetals, superconductive wires, contact spring composite alloys, latching relays having two-stepped magnetic hysteresis, and high fidelty magnetic heads.

## Claims

1. A process for producing a multi-layered alloy having at least one layer of amorphous alloy, by ejecting from a nozzle (2a) a first molten metal onto one (3a) of a pair of rollers (3a, 3b) rotating at a high speed or on a metal belt (6) driven by the roller, and rotating the ejected metal with the rollers for rapid cooling, characterized in that two molten metal layers (A, B) are formed on the rotating roller (3a) or the belt (6) by ejecting from a second nozzle (2b) a second molten metal different from said first metal onto said first molten metal for rapid cooling, the two metal layers (A, B) being then adhered under pressure by rolling them between said pair of rollers (3a, 3b; 5b, 5c).

2. A process according to claim 1, characterized in that said first molten metal and said second molten metal both form respective layers (A, B) of amorphous metals.

3. A process according to claim 1, characterized in that said first molten metal forms a layer (A) of crystalline metal and said second molten metal forms a layer (B) of amorphous metal.

4. A process according to claim 2, characterized in that the temperature of said first molten metal when said second molten metal is ejected onto said first molten metal is higher than the crystallizing temperature of said first molten metal and lower than the solidifying temperature thereof.

5. A process according to claim 3, characterized in that the temperature of said first molten metal when said second molten metal is ejected onto said first molten metal is higher than 2/3 of the melting point of said first molten metal and lower than the solidifying temperature thereof.

6. A process according to any one of claims 1 to 6, characterized in that the temperature of said second molten metal at the contact point between said pair of rollers (3a, 3b; 5b, 5c) is higher than 2/3 of the melting point of said first molten metal and is lower than the melting point thereof.

## Patentansprüche

1. Verfahren zur Herstellung einer mehrschichtigen Legierung mit mindestens einer Schicht einer amorphen Legierung, bei dem aus einer ersten Düse (2a) eine erste Metallschmelze auf die eine (3a) von zwei bit hoher Drehzahl umlaufenden Walzen (3a, 3b) oder auf ein durch die Walze angetriebenes Metallband gespritzt und das gespritzte Metall zur schnellen Abkühlung mit den Walzen in Umlaufbewegung gehalten wird, dadurch gekennzeichnet, daß auf der sich drehenden Walze (3a) oder dem Metallband (6) zwei Metallschmelzenschichten geformt werden, indem aus einer zweiten Düse (2b) eine vom ersten Metall verschiedene zweite Metallschmelze auf die erste Metallschmelze zur schnellen Kühlung aufgespritzt wird, und die beiden Metallschichten (A, B) sodann durch Auswalzen zwischen den beiden Walzen (3a, 3b; 5b, 5c) unter Druck miteinander verbunden werden.

2. Verfahren nach Anspruch 1, dadurch gekennzeichnet, daß die erste und die zweite Metallschmelze jeweils Schichten (A, B) amorpher Metalle bilden.

3. Verfahren nach Anspruch 1, dadurch gekennzeichnet, daß die erste Metallschmelze eine Schicht (A) eines kristallinen Metalls und die zweite Metallschmelze eine Schicht (B) amorphen Metalls bilden.

4. Verfahren nach Anspruch 2, dadurch gekennzeichnet, daß die Temperatur der ersten Metallschmelze beim Aufspritzen der zweiten Metallschmelze auf die erste Metallschmelze höher als die Kristallisationstemperatur der ersten Metallschmelze und niedriger als ihre Erstarrungstemperatur ist.

5. Verfahren nach Anspruch 3, dadurch gekennzeichnet, daß die Temperatur der ersten Metallschmelze, wenn die zweite Metallschmelze auf die erste Metallschmelze aufgespritzt wird, höher als 2/3 des Schmelzpunkts der ersten Metallschmelze und niedriger als ihre Erstarrungstemperatur ist.

6. Verfahren nach einem der Ansprüche 1 bis 5, dadurch gekennzeichnet, daß die Temperatur der zweiten Metallschmelze am Berührungspunkt zwischen den beiden Walzen (3a, 3b; 5b, 5c) höher als 2/3 des Schmelzpunkts der ersten Metallschmelze und niedriger als ihr Schmelzpunkt liegt.

**Revendications**

1. Procédé de production d'un alliage à couches multiples comprenant au moins une couche d'alliage amorphe par éjection avec une buse (2a) d'un premier métal fondu sur l'un (3a) de deux rouleaux (3a, 3b) tournant à grande vitesse ou sur une bande métallique (6) entrainée par le rouleau et en faisant tourner le métal éjecté avec les rouleaux pour en refroidissement rapide, caractérisé en ce que deux couches de métaux fondus (A, B) sont formées sur le rouleau en rotation (3a) ou la bande (6) en éjectant par une seconde buse (2b) un second métal fondu différent dudit premier métal sur ledit premier métal fondu pour un refroidissement rapide, les deux couches de métal (A, B) adhérant sous pression par leur laminage entre lesdits deux rouleaux (3a, 3b; 5b, 5c).

2. Procédé selon la revendication 1, caractérisé en ce que ledit premier métal fondu et ledit second métal fondu forment des couches respectives (A, B) de métal amorphe.

3. Procédé selon la revendication 1, caractérisé en ce que ledit premier métal fondu forme une couche (A) de métal cristallin et ledit second métal fondu forme une couche (B) en métal amorphe.

4. Procédé selon la revendication 2, caractérisé en ce que la température dudit premier métal fondu quand ledit second métal fondu est éjecté sur ledit premier métal fondu est supérieure à la température de cristallisation dudit premier métal fondu et inférieure à sa température de solidification.

5. Procédé selon la revendication 3, caractérisé en ce que la température dudit premier métal fondu quand ledit second métal fondu est éjecté sur ledit premier métal fondu est supérieure à 2/3 du point de fusion dudit premier métal fondu et inférieure à sa température de solidification.

6. Procédé selon l'une quelconque des revendications 1 à 6, caractérisé en ce que la température dudit second métal fondu au point de contact entre lesdits deux rouleaux (3a, 3b; 5b, 5c) est supérieure à 2/3 du point de fusion dudit premier métal fondu et inférieure à sont point de fusion.

FIG. 1

FIG. 2